# EUROPEAN PATENT APPLICATION

(11) **EP 1 111 935 A1**
(43) Date of publication of application: **27.06.2001**
(21) Application number: 00917392.3
(22) Date of filing: 20.04.2000
(51) Int. Cl.: H04N 7/64, H04L 1/00

(54) **MULTIMEDIA INFORMATION COMMUNICATION DEVICE AND ITS METHOD**

(30) Priority: 09.07.1999 JP 19565999
(71) Applicant: MITSUBISHI DENKI KABUSHIKI KAISHA, Tokyo 100-8310 (JP)
(72) Inventor: ICHIGUCHI, Tetsuichiro, Chiyoda-ku Tokyo 100-8310 (JP); OHIRA, Hideo, Chiyoda-ku Tokyo 100-8310 (JP); KONDOH, Shouzou, Chiyoda-ku Tokyo 100-8310 (JP)
(74) Representative: Pfenning, Meinig & Partner
(86) International application number: JP0002598
(87) International publication number: WO0105160

(57) **Abstract**

A data demultiplexer in a media demultiplexer dissolves a bit stream into video packets and audio packets. A CRC calculating unit subjects data from a CRC character isolating unit to the same calculation as performed at the encoding end and outputs a result of calculation to an error information adding unit. The error information adding unit compares the result of calculation with a CRC character attached to the video packet so as to determine whether they match. The error information adding unit adds error information based on a result of determination to the video packet. The resultant revised video packet is output to a video decoder via a buffer.

## Description

### TECHNICAL FIELD

The present invention generally relates to multimedia information communication apparatuses such as a portable visual telephone and a digital broadcast receiver and to methods employed therein. More particularly, the present invention relates to a multimedia information communication apparatus and method in which a multiplexed coded bit stream carrying video data and audio data is received and demultiplexed in a media demultiplexer, the video data being output to a video decoder and the audio data being output to an audio decoder so that the coded video data and audio data are decoded.

### BACKGROUND ART

Japanese Laid-Open Patent Publication No. 8-204584 and Japanese Laid-Open Patent Publication No. 8-65278 disclose multimedia information communication apparatuses in which an error in the video data carried in the bit stream is detected only when the video data is decoded by the video decoder in a decoding circuit in a decoding unit.

A description will now be given of the procedure for error detection in the related-art multimedia information communication apparatus.

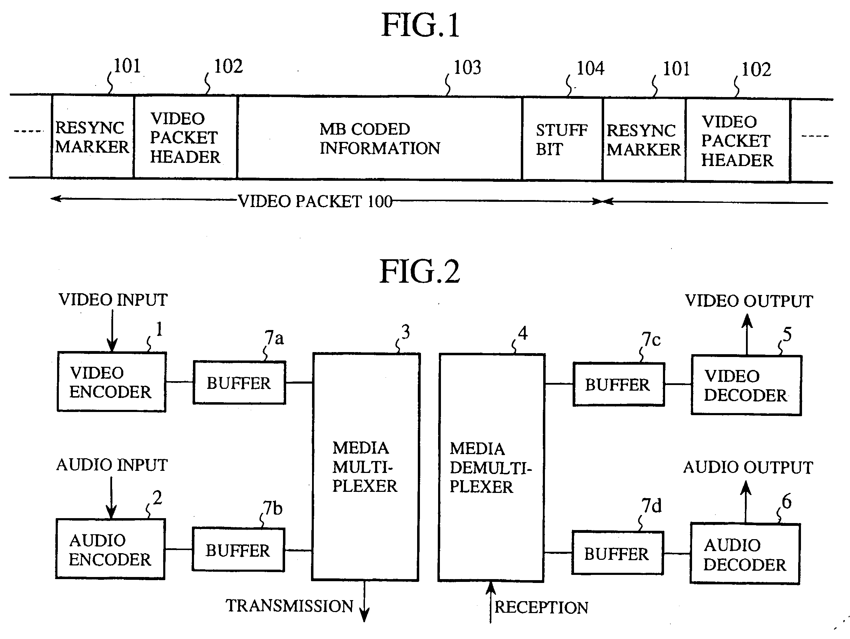

Fig. 1 shows a construction of MPEG4 (ISO/IEC Standard 14496-2) video data that is carried in a coded bit stream in a multiplex format.

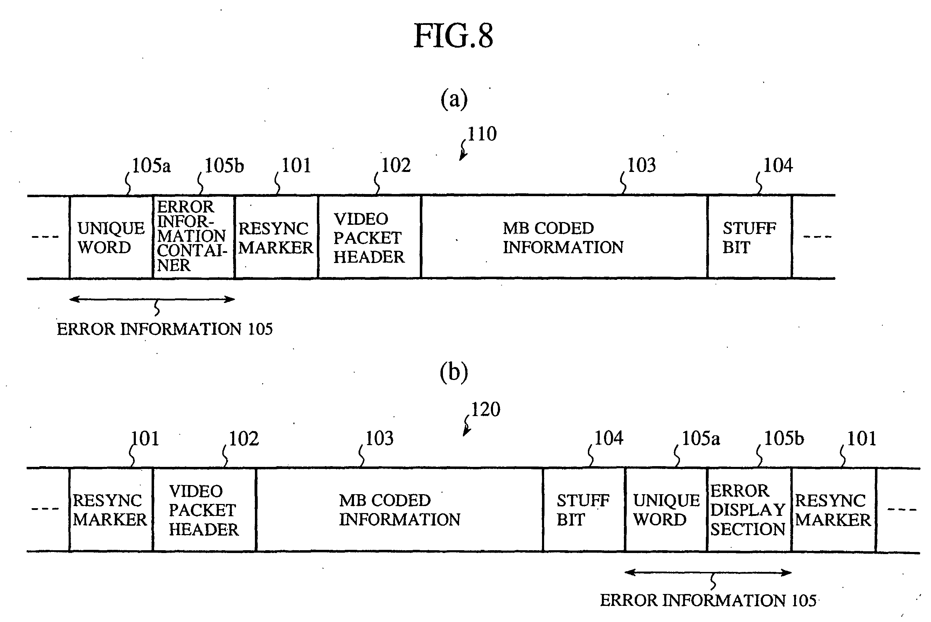

The MPEG4 standard is designed to provide a reinforced tolerance to error in a coded bit stream in order to enable image communication over channels such as a wireless channel and the Internet characterized by difficulty in guaranteeing the quality of communication. Ordinary MPEG4 video data is constructed in units known as a video packet (VP) 100 as shown in Figs. 8(a) and 8(b). Referring to Fig. 1, a video packet 100 is comprised of a Resync Marker (RM) 101, a video packet header 102, macro block (MB) coded information 103 and a stuff bit 104 at the end.

The Resync Marker 101 comprises a unique bit pattern that does not match any of the combinations of variable-length codes that occur in the bit stream. The Resync Marker 101 is provided to prevent an error from being propagated when the bit stream is decoded. In case of an error, the video decoder resumes decoding of the video packet properly at a position at which the Resync Marker 101 is detected as a synchronous word. The video packet header 102 next to the Resync Marker 101 includes important information required in decoding the video data. The macro block (MB) coded information 103 is coded information for each macro block (MB) constituting a unit used in encoding of video data at the encoding end. The stuff bit 104 at the end is inserted for byte alignment of the Resync Marker 101 in the bit stream.

A description will now be given of a process for locating an ordinary error when the MPEG4 video data is decoded. Decoding of the video data is started at the Resync Marker 101 to proceed in a forward direction until an error is detected. Subsequently, decoding of the video packet is resumed at the stuff bit 104 in a reverse direction until an error is detected.

According to the related-art multimedia information communication apparatus as described above, error correction in the video data is conducted only when the data is decoded by a decoding circuit. A disadvantage of this arrangement is that the decoding process conducted until the error is detected is wasted so that the subsequent process for preventing error propagation cannot be performed efficiently.

Accordingly, an object of the present invention is to provide a multimedia information communication apparatus in which the aforementioned problem is eliminated and in which the decoding process is not wasted in case of an error and in which a process for preventing error propagation is performed efficiently.

### DISCLOSURE OF THE INVENTION

The aforementioned objects can be achieved by a multimedia information communication apparatus for dissolving, at a data demultiplexing, a multiplexed coded bit stream into video data and audio data, the video data having attached thereto an error correction character produced at an encoding end in accordance with a predetermined error correction calculation, and for decoding the video data and the audio data by outputting the video data to a video decoder and outputting the audio data to an audio decoder, wherein the media demultiplexer comprises: demultiplexing means for dissolving the coded bit stream into the video data and the audio data; error correction character generating means for receiving the video data from the demultiplexing means and subjecting same to the predetermined error correction calculation; error information adding unit for comparing a result of calculation by the error correction character generating means with the error correction character attached to the video data, and for attaching error information based on a result of comparison to the video data, and wherein the video decoder decodes the video data by referring to the error information attached to the video data by the error information adding unit.

In accordance with the invention, the multimedia demultiplexer of the multimedia information communication apparatus according to claim 1 may further comprise error correction character isolating means for receiving the video data from the demultiplexing means, isolating the error correction character from the video data, and for outputting video data stripped of the error correction character to error information adding unit.

In further accordance with the invention, the coded bit stream of the multimedia information communication apparatus according to claim 1 or claim 2 may conform to the standard video data compressing and encoding system specified in the ITU-T Recommendation and the ISO/IEC Standard.

In further accordance with the invention, the coded bit stream of the multimedia information communication apparatus according to claim 1 or claim 2 may be an MPEG4 (ISO/IEC Standard 14496-2) bit stream specified in the ITU-T Recommendation and the ISO/IEC Standard describing a video compression and encoding system, and each video packet in the video data constituting an MPEG4 data transfer unit may have attached thereto an error correction character generated at the encoding end in accordance with the predetermined error correction calculation; the error correction character generating means in the media demultiplexer may subject each video packet to the predetermined error correction calculation; and the error information adding unit in the media demultiplexer may compare a result of calculation in each video packet by the error correction character generating means with the error correction character attached to each video packet in the video data, and attach error information based on a result of comparison to each video packet in the video data.

In further accordance with the invention, the error information adding means of the multimedia information communication apparatus according to claim,4 may add the error information at the end of each video packet in the video data.

In further accordance with the invention, the error information adding means of the multimedia information communication apparatus according to any of claims 1 through 5 may add the error information that starts with a fixed-length code comprising a unique bit pattern to each video packet in the video data.

In accordance with the invention, the aforementioned objects can also be achieved by a multimedia information communication method for dissolving a multiplexed coded bit stream into video data and audio data, the video data having attached thereto an error correction character produced at an encoding end in accordance with a predetermined error correction calculation, and for decoding the video data and the audio data, comprising steps of: receiving the coded bit stream and dissolving same into video data and audio data so as to subject the video data to the predetermined error correction calculation; comparing a result of calculation with the error correction character attached to the video data, and adding error information based on a result of comparison to the video data; and decoding the video data by referring to the error information attached to the video data.

It is to be appreciated that, according to the present invention, each video packet is checked by the media demultiplexer for an error, before the decoding process by the video decoder. Therefore, the decoding process of the video decoder is prevented from being wasted. Error detection and error correction can be conducted efficiently so that the high-quality image reproduction is smoothly available.

### BRIEF DESCRIPTION OF THE DRAWINGS

Fig. 1 is a diagram showing an example of construction of MPEG video data carried in a coded bit stream in a multiplex format;
Fig. 2 is a block diagram of a multimedia information communication apparatus according to a first embodiment of the present invention;
Fig. 3 is a diagram showing a construction of and a process performed in a media demultiplexer according to the first embodiment;
Fig. 4 is a diagram showing how a video packet is revised in the media demultiplexer according to the first embodiment;
Fig. 5 is a diagram showing a revised video packet in which error information is added by an error information adding unit according to the first embodiment;
Fig. 6 is a diagram showing a revised video packet in which error information is added by an error information adding unit according to a second embodiment of the present invention;
Fig. 7 is a diagram showing a location and configuration of error information added by an error information adding unit according to a third embodiment of the present invention; and
Figs. 8(a) and (b) are diagrams showing the error information according to the first embodiment in which the construction of error information according to the third embodiment is employed and the error information according to the second embodiment in which the construction of error information according to the third embodiment is employed, respectively.

### BEST MODES FOR CARRYING OUT THE INVENTION

For detailed description of the invention, best modes for carrying out the invention will now be discussed with reference to the attached drawings.

### First Embodiment

Fig. 2 is a block diagram of a multimedia information communication apparatus according to a first embodiment of the present invention. Fig. 2 is derived from ITU-T Audiovisual/Multimedia (H series) Recommendation (Shin Nippon ITU Society), Attachment D, "Information Supplying Purpose", showing a transmitter and a receiver of a multimedia information communication apparatus.

Referring to Fig. 2, the transmitter comprises: a video encoder 1 for compressing and encoding image; an audio encoder 2 for compressing and encoding the audio data; a media multiplexer 3 for multiplexing an output video encoded bit stream and an output audio encoded bit stream; and buffers 7a and 7b. The receiver comprises: a media demultiplexer 4 for demultiplexing the multiplexed information; a video decoder 5 for decoding the video data; an audio decoder 6 for decoding the audio data; and buffers 7c and 7d. The novel feature of the multimedia information communication apparatus according to the present invention consists in the construction of the receiver, not the transmitter. More specifically, the novelty resides in the fact that the receiver includes the media demultiplexer 4 and the video decoder 5 described below.

An image encoding system to which the present invention is applied may be any standard encoding method specified in ITU-T Recommendations, ISO/IEC Standards. It is assumed that the invention according to the first embodiment described below is applied to MPEG4 (ISO/IEC Standard 14496-2).

A description will now be given of a construction of and a process in the media demultiplexer according to the first embodiment.

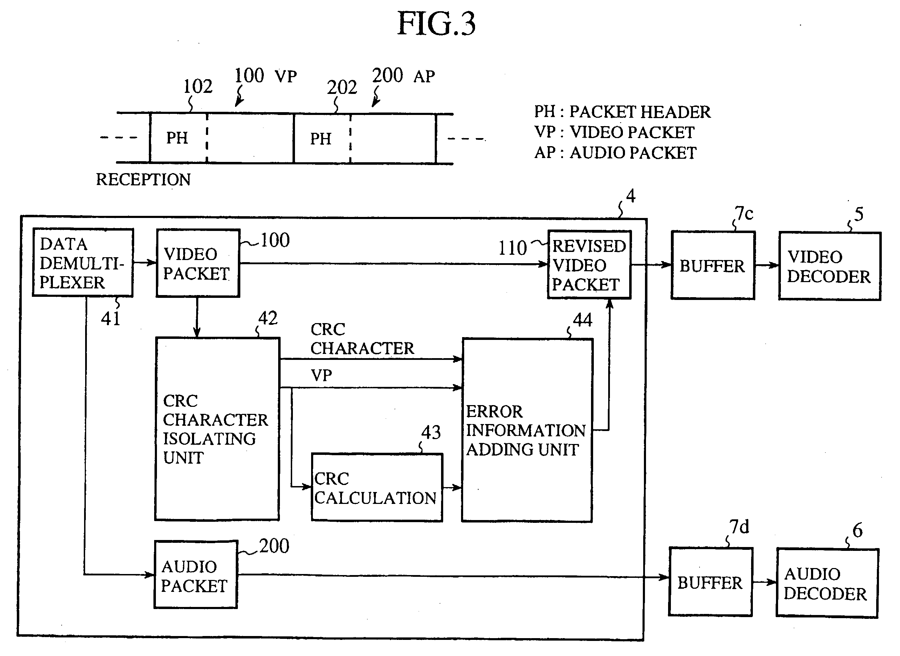

Fig. 3 shows a construction of and a process performed in the media demultiplexer 4.

As shown in Fig. 3, the media demultiplexer 4 according to the first embodiment comprises a data demultiplexer 41, a CRC character isolating unit 42, a CRC calculating unit 43 and an error information adding unit 44. Referring to Fig. 3, the media demultiplexer 4 is shown to be comprised of hardware members. The present invention may also be constructed such that the function of each of the units is implemented by software means, that is, by a program.

Referring again to Fig. 3, a description will be given of the operation of the media demultiplexer 4 according to the first embodiment.

The coded bit stream is received by the apparatus and input to the media demultiplexer 4. The data demultiplexer 41 identifies the packet header (PH) of the packet carried in the coded bit stream in a multiplex format so as to determine if the packet is a video packet (VP) 100 or an audio packet (AP) 200 and to isolate the video packet (VP) 100 from the audio packet (AP) 200. The data demultiplexer 41 then outputs the video packet (VP) 100 to the CRC character isolating unit 42 and outputs the audio packet (AP) 200 to the buffer 7d of the audio decoder 6. At this stage, the configuration of the video packet (VP) 100 is the same as an ordinary MPEG4 video packet shown in Figs. 8(a) and 8(b).

The CRC character isolating unit 42 receives the video packet (VP) 100 output from the media demultiplexer 4 so as to strip each video packet (VP) 100 of a CRC character. The CRC character isolating unit 42 outputs the isolated CRC character to the error information adding unit 44. The CRC character isolating unit 42 outputs isolated video packet to the CRC calculating unit 43 and the error information adding unit 44. As shown in Fig. 3, each of the video packets has appended to its end a cyclic redundancy check (CRC) character generated at the encoding (transmitting) end by subjecting specific data of the video data to a calculation that uses a predetermined polynomial.

The CRC calculating unit 43 receives the video packet stripped of the CRC character in the order of occurrence and subjects the video packet to the same calculation used at the encoding (transmitting). The CRC calculating unit 43 outputs the result of calculation to the error information adding unit 44.

The error information adding unit 44 stores the video packet and the CRC character isolated from each other by the CRC character isolating unit 42 in an internal buffer (not shown) or in an internal memory (not shown). When the result.of calculation using the same algorithm used at the encoding (transmitting) end is fed from the CRC calculating unit 43, the error information adding unit 44 reads the CRC character stored in the internal buffer (not shown) or the like. The error information adding unit 44 compares the result of calculation with the CRC character thus read so as to determine if they match. When a determination is given, the error information adding unit 44 reads out the video packet stripped of the CRC character and stored in the internal buffer or the like. The error information adding unit 44 then adds error information indicating the determination to the video packet thus read out. The resultant revised video packet 110 is output to the buffer 7c.

Every time the video packet is input from the data demultiplexer 41, the aforementioned process is repeated by the CRC character isolating unit 42, the CRC calculating unit 43 and the error information adding unit 44 so that the revised video packet 110 is output to the buffer 7c.

Assuming that the video decoder 5 is informed that error information 105 is provided at the head of the revised video packet 110, the video decoder 5 can determine whether error propagation occurs on a packet by packet basis before decoding the video data comprising the revised video packet 110 stored in the buffer 7c and provided with the error information 105. This is achieved by receiving the video packet 110 in the order of occurrence and by referring to the error information attached to the video packet 110 every time the video packet 110 occurs.

Since the video decoder 5 is given information as to whether an error occurs in each revised video packet 110 before decoding the video data by referring to the error information, it is ensured that the revised video packet 110 containing the error is not decoded.

Accordingly, the decoding process of the video decoder 5 is prevented.from being wasted. As a result, an error is prevented from being propagated efficiently. Error concealment at decoding using the error information according to the invention may have several variations. For example, the video packet containing an error may be replaced by a previous video packet. Any type of appropriate error containment may be applied to the present invention.

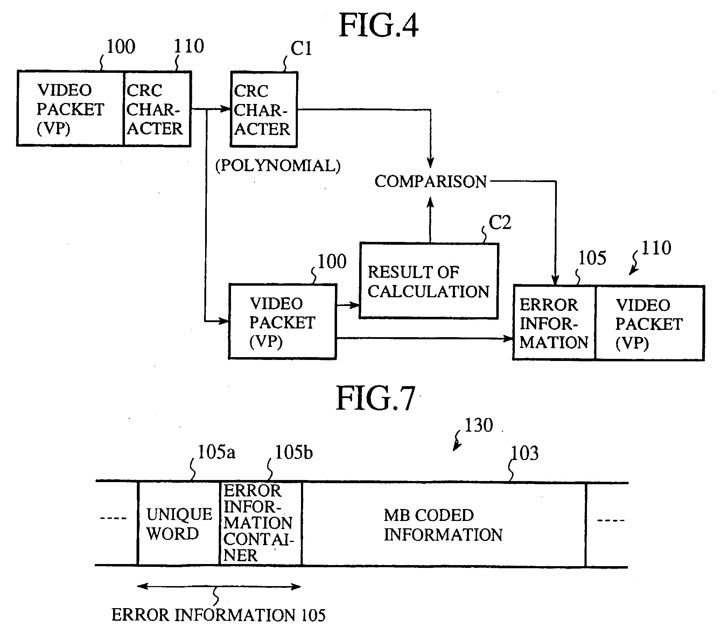

Fig. 4 is a diagram showing how a video packet is revised in the media demultiplexer according to the first embodiment.

As shown in Fig. 3, the video packet 100 provided with a CRC character C1 is dissolved by the CRC character isolating unit 42 into the video packet 100 and the CRC character C1. The CRC calculating unit 43 conducts a calculation which is the same as the CRC calculation at the encoding end whereby specific data comprising the video packet 100 is subject to the calculation using a predetermined polynomial. As a result, a result of calculation C2 is output.

The error information adding unit 44 compares the CRC character C1 with the result of calculation C2. When the CRC character C1 matches the result of calculation C2, the error information adding unit 44 adds error information 105, for example, numeral "0", indicating that there is no error, at the head of the video packet 100, that is, before the resync marker 01 of the video packet 100, producing the revised video packet 110 different from the video packet 100. When the CRC character C1 does not match the result of calculation C2, the error information adding unit 44 adds the error information 105, for example, numeral "1", indicating that there is an error, at the head of the video packet 110, that is, before the resync marker 110. According to the first embodiment, since the CRC character C1 is isolated by the CRC character isolating unit 42 from the video packet 100, the CRC character Cl is not added to the revised video packet 110.

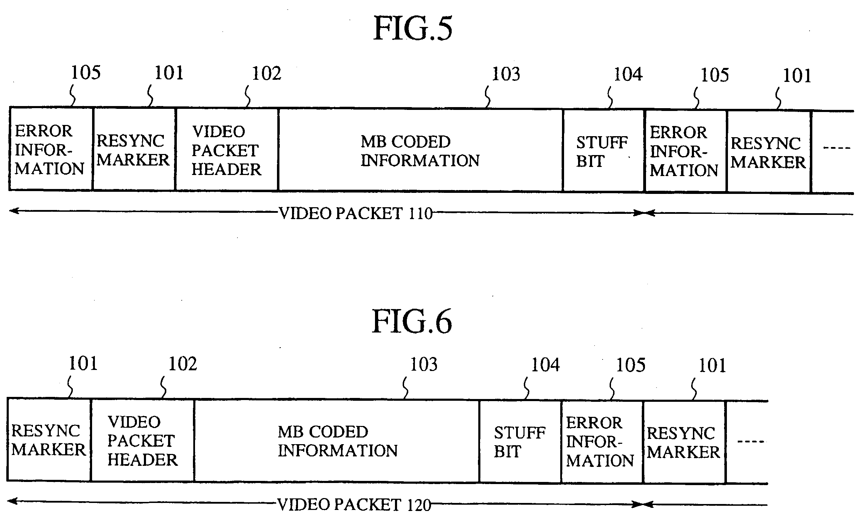

Fig. 5 is a diagram showing a revised video packet in which the error information 105 is added by the error information adding unit 44 according to the first embodiment. As shown in Fig. 4, the error information 105 is added to precede the resync marker 101 of the video packet 110. According to the first embodiment of the present invention, an arrangement is set up between the media demultiplexer 4 and the video decoder 5 that the error information 105 is added at the head of the revised video packet 110.

As described above, the first embodiment of the present invention is constructed such that the media demultiplexer 4 preceding the video decoder 5 checks each of the video packets 100 constituting the video data for an error. Therefore, the video encoder 5 is given information relating to an error in each of the video packets 100 constituting the video data before decoding the video data so that the video encoder 5 can efficiently prevent an error from being propagated, thus improving tolerance to error.

The first embodiment of the present invention is described as being provided with the CRC character isolating unit 42 for isolating the CRC character C1 from the video packet 100. Alternatively, the CRC character isolating unit 42 may be eliminated. With this construction, the video packet 100 provided with the CRC character C1 is fed directly from the data demultiplexer 41 to the CRC calculating unit 43 and the error information adding unit 44, causing the CRC character C1 to remain contained in the revised video packet 110. Elimination of the CRC character isolating unit 42 is advantageous in that the construction is simplified and the process is facilitated.

### Second Embodiment

In the first embodiment, the error information adding unit 44 adds the error information to precede the resync marker of the video packet in which an error occurs before delivering the data to the video decoder. According to the second embodiment, the error information is added to precede the resync marker of a subsequent video packet 120. The construction of the multimedia communication apparatus according to the second embodiment is the same as the corresponding construction of the first embodiment. Therefore, only the construction of the video data comprising the revised video packet will now be described.

Fig. 6 is a diagram showing the revised video packet 120 in which error information is added by the error information adding unit 44 according to the second embodiment of the present invention. As shown in Fig. 5, according to the second embodiment, the error information 105 is added subsequent to the stuff bit 104 at the end of each video packet 120. The error information indicating an error in the given video packet 120 is added to precede the resync marker 101 of the subsequent video packet 120. A stream comprising the resync marker 101 at its head and the error information 105 at its end constitutes the revised video packet 120.

Thus, the second embodiment provides an advantage similar to the advantage provided by the first embodiment in that the information relating to an error in each video packet 120 is available before the video decoder 5 performs a decoding process, thereby preventing error propagation and improving error tolerance.

In the first embodiment, the error information 105 is added at the head of the video packet 110. The error information adding unit 44 stores the video packet 110 in the internal buffer until the error information 105 is added to the video packet 110. The second embodiment differs from the first embodiment in that the error information is added at the end of the subsequent video packet 120, that is, added to precede the resync marker 101 of each video packet 120. The error information 105 is output after the video packet 120 is output. Consequently, according to the second embodiment, the error information adding unit 44 is not required to store the video packet 120 in the internal buffer. The memory required to be attached to the error information adding unit 44 in the first embodiment is not necessary so that the construction is simplified.

In the first and second embodiments, the error information 105 is described as being provided to precede the resync marker 101 of the current video packet or the subsequent video packet. Alternatively, the error information 105 may also be provided subsequent to the resync marker 101.

### Third Embodiment

As described above, in the first and second embodiments, an arrangement is set up between the media demultiplexer 4 and the video decoder 5 that the error information is provided to precede or succeed the current video packet. The arrangement may also be that the error information is provided to precede or succeed the previous video packet. In contrast, according to the third embodiment, the error information is provided at any desired location other than a location preceding or succeeding the resync marker 101. The construction of the multimedia communication apparatus according to the third embodiment is the same as the corresponding construction of the first embodiment. Therefore, only the construction of the revised video data comprising the video packet will now be described.

Fig. 7 is a diagram showing a location and configuration of error information added by the error information adding unit according to a third embodiment of the present invention.

As shown in Fig. 7, the error information 105 is not provided to precede the resync marker 101. Instead, the error information 105 may be provided to precede the macro block (MB) coded information 103. More specifically, a fixed-length code comprising a unique bit pattern such as a unique word 105a comprising, for example, a reserved code 000001C5 of an MPEG4 header is followed by an error information container 105b which contains the error information 105.

In the case of the first and second embodiments, the error information 105 is provided to precede or succeed the resync marker 101, that is, provided to precede or succeed a codeword comprising a unique bit pattern that does not match any of the combinations of the variable-length codes occurring in the bit stream. Given that the video decoder 5 is given the information that the error information 105 is provided to precede or succeed the resync marker 101, it is ensured that the video decoder 5 recognizes the error information 105. In contrast, in the third embodiment, the video decoder 5 is not given any information relating to where the error information 105 is provided and therefore cannot locate the error information 15 unless the measure described above is employed. In other words, by containing the error information 105 in the error information container 105b led by the unique word 105a, the fixed-length code comprising a unique bit pattern, and giving the video encoder 5 the information that the error information 105 is led by the unique word 105a, it is ensured that the video decoder 5 recognizes the error information 105.

Accordingly, the error information 105, appended to the video packet 110 through the media demultiplexer 4, is led by the unique word 105a. The video decoder 5 can successfully detect the error information 105, by detecting the unique word 105a, even if the error information 105 is provided in an arbitrary location other than the immediate neighborhood of the resync marker 101 of the video packet and even if the location of the error information 105 is not known to the video decoder 5.

The first and second embodiments may also be constructed such that the unique word 105a leads the error information, as in the third embodiment.

Figs. 8(a) and (b) are diagrams showing the error information according to the first embodiment in which the construction of error information according to the third embodiment is employed and the error information according to the second embodiment in which the construction of error information according to the third embodiment is employed, respectively.

Referring to Fig. 8(a), according to the first embodiment, the error information 105 is provided to precede the resync marker 10 of the current video packer 110. A fixed-length code comprising a unique bit pattern such as the unique word 105a comprising, for example, a reserved code 000001C5 of an MPEG4 header leads the error information container 105b which contains the error information 105.

Referring to Fig. 8(b), according to the second embodiment, the error information 105 is provided to precede the resync marker 101 of the subsequent video packet 110. A fixed-length code comprising a unique bit pattern such as the unique word 105a comprising, for example, a reserved code 000001C5 of an MPEG4 header leads the error information container 105b which contains the error information 105.

The resultant construction of the video data is more redundant than the corresponding construction of the video packet 110 and video packet 120 according to the first embodiment alone and the second embodiment alone, respectively. However, unlike the first and second embodiments alone, the video decoder 5 can easily detect the error information 105 of the video packet, even when the video decoder 5 is not given the information that the error information generated by the media demultiplexer 4 is provided to precede or succeed the resync marker 101 of the video packet. An advantage of the arrangements of Figs. 8(a) and 8(b) over the third embodiment shown in Fig. 7 is that, like the first and second embodiments alone, the error information 105 is not found between the resync marker 101 at the head of the video packet and the stuff bit 104 at the end thereof, the construction of the video packet remains the same as that of the related art, facilitating the video decoder 5 to process the video packet without employing any special measures.

In the description given above of the first through third embodiments, the data demultiplexer 41, the CRC character isolating unit 42, the CRC calculating unit 43 and the error information adding unit 44 are described as being included in the media demultiplexer 4. Alternatively, these units may also be provided outside the media demultiplexer 4 as long as these units are provided to precede the video decoder 5.

### INDUSTRIAL APPLICABILITY

It is to be appreciated that, according to the present invention, each video packet is checked by the media demultiplexer for an error, before the decoding process by the video decoder. Therefore, the decoding process of the video decoder is prevented from being wasted. Error detection and error correction can be conducted efficiently so that the high-quality image reproduction is smoothly available.

## Claims

1. A multimedia information communication apparatus for dissolving, at a data demultiplexing, a multiplexed coded bit stream into video data and audio data, the video data having attached thereto an error correction character produced at an encoding end in accordance with a predetermined error correction calculation, and for decoding the video data and the audio data by outputting the video data to a video decoder and outputting the audio data to an audio decoder, wherein
said media demultiplexer comprises:
demultiplexing means for dissolving the coded bit stream into the video data and the audio data;
error correction character generating means for receiving the video data from said demultiplexing means and subjecting the same to the predetermined error correction calculation;
error information adding unit for comparing a result of calculation by said error correction character generating means with the error correction character attached to the video data, and for attaching error information based on a result of comparison to the video data, and wherein
said video decoder decodes the video data by referring to the error information attached to the video data by said error information adding unit.

2. The multimedia information communication apparatus according to claim 1, wherein said multimedia demultiplexer further comprises error correction character isolating means for receiving the video data from said demultiplexing means, isolating the error correction character from the video data, and for outputting video data stripped of the error correction character to error information adding unit.

3. The multimedia information communication apparatus according to claim 1, wherein the coded bit stream conforms to the standard video data compressing and encoding system specified in the ITU-T Recommendation and the ISO/IEC Standard.

4. The multimedia information communication apparatus according to claim 1, wherein:
the coded bit stream is an MPEG4 (ISO/IEC Standard 14496-2) bit stream specified in the ITU-T Recommendation and the ISO/IEC Standard describing a video compression and encoding system, and each video packet in the video data constituting an MPEG4 data transfer unit has attached thereto an error correction character generated at the encoding end in accordance with the predetermined error correction calculation;
said error correction character generating means in said media demultiplexer subjects each video packet to the predetermined error correction calculation; and
said error information adding unit in said media demultiplexer compares a result of calculation in each video packet by said error correction character generating means with the error correction character attached to each video packet in the video data, and attaches error information based on a result of comparison to each video packet in the video data.

5. The multimedia information communication apparatus according to claim 4, wherein said error information adding means adds the error information at the end of each video packet in the video data.

6. The multimedia information communication apparatus according to claim 1, wherein
said error information adding means adds the error information that starts with a fixed-length code comprising a unique bit pattern to each video packet in the video data.

7. A multimedia information communication method for dissolving a multiplexed coded bit stream into video data and audio data, the video data having attached thereto an error correction character produced at an encoding end in accordance with a predetermined error correction calculation, and for decoding the video data and the audio data, comprising steps of:
receiving the coded bit stream and dissolving the same into video data and audio data so as to subject the video data to the predetermined error correction calculation;
comparing a result of calculation with the error correction character attached to the video data, and adding error information based on a result of comparison to the video data; and
decoding the video data by referring to the error information attached to the video data.
